# EUROPÄISCHE PATENTSCHRIFT

(11) **EP 2 655 918 B1**
(45) Veröffentlichungstag und Bekanntmachung des Hinweises auf die Patenterteilung: **29.06.2016**
(21) Anmeldenummer: 12704081.4
(22) Anmeldetag: 15.02.2012
(51) Int. Cl.: F16M 13/02, F16F 15/08

(54) **SCHWINGUNGSDÄMPFENDE AUFNAHMEVORRICHTUNG**
VIBRATION DAMPING RECEPTACLE DEVICE
DISPOSITIF DE LOGEMENT AMORTISSANT LES VIBRATIONS

(30) Priorität: 11.03.2011 DE 102011013685
(43) Veröffentlichungstag der Anmeldung: 30.10.2013
(73) Patentinhaber: EBM-PAPST Landshut GmbH, 84030 Landshut (DE)
(72) Erfinder: HERTREITER, Martin, 84180 Loiching (DE); SCHLOPAKOWSKI, Frank, 84034 Landshut (DE); LUTZ, Josef, 84034 Landshut (DE)
(74) Vertreter: Peter, Julian
(86) Internationale Anmeldenummer: PCT/EP2012/052604
(87) Internationale Veröffentlichungsnummer: WO 2012/123206

(56) Entgegenhaltungen:
- WO-A2-03/042567
- DE-A1- 4 405 577
- DE-A1- 10 204 037
- FR-A1- 2 806 759
- GB-A- 546 004
- GB-A- 553 793
- GB-A- 665 079
- GB-A- 665 079
- JP-A- H05 168 188
- US-A- 2 076 034
- US-A- 3 154 704
- US-A- 3 941 339

## Beschreibung

Die Erfindung betrifft eine schwingungsdämpfende Aufnahmevorrichtung zur Aufnahme eines Motors an einer Gehäusewand, insbesondere einer Gebläsegehäusewand.

Schwingungsdämpfende bzw. - isolierende Aufnahmevorrichtungen sind aus dem Stand der Technik bekannt. Beispielsweise offenbart die DE 20 2005 004 271 U1 eine schwingungsdämpfende Lagerung eines Motors auf einem Untergrund, bei der ein elastisches Element zwischen einer Motorhalterung und einem Untergrund beidseitig eingeknöpft angeordnet ist.

Aus der DE 201 09332 U1 ist eine Aufhängung zur Lagerung einer Maschine auf einer Gehäusewand offenbart, bei der ein auf der Gehäusewand angeordnetes bolzenartiges Befestigungselement durch ein an der Motorhalterung angeordnetes Dämpfungs- bzw. Entkopplungselement hindurchgeführt wird, um eine formschlüssige Verbindung herzustellen.

Ferner offenbart die DE 4405577 A1 eine Anordnung zur schwingungsgedämpften Halterung eines Elektromotors an einer Lüftergehäusewand über ein elastisches Dämpferelement, bei der die Dämpferelemente scheibenförmig ausgebildet sind und von den motorbefestigenden Motorschraubverbindungen durch-drungen werden.

Ein Verfahren zur Dämpfung von Schwingungen und zur Montage der zugehörigen Vorrichtung ist beispielsweise in der EP 1303710 B1 offenbart.

Weiterer relevanter Stand der Technik zur Schwingungsdämpfung eines Motors ist durch die Schriften JP H05 168188 A sowie US 3,941,339 A gegeben.

Ausgehend von den im Stand der Technik offenbarten Lösungen liegt der Erfindung die Aufgabe zugrunde, eine Anordnung der gattungsgemäßen Art bereitzustellen, die zum einem durch eine reduzierte Anzahl von benötigten Bauteilen kostengünstiger hergestellt und schneller montiert werden kann, zum anderen eine verbesserte Abstützung bei gleichbleibend hoher Dämpfung gewährleistet.

Die Aufgabe wird gelöst durch eine schwingungsdämpfende Aufnahmevorrichtung gemäß Patentanspruch 1.

Bei einer Anordnung eines Elektromotors an einer Gebläsegehäusewand müssen die vom Motor erzeugten Schwingungen gedämpft bzw. entkoppelt werden, um weitgehend eine Übertragung auf das Gebläsegehäuse zu verhindern. Da die Gebläse je nach Bedarf mit senkrechter oder waagerechter Wellenlage verbaut werden, muss neben der Dämpfung auch eine ausreichende Abstützung des Motors sichergestellt werden. Die Einbaulage des Gebläses darf die Lage des Lüfterrades zum Gehäuse nicht beeinflussen. Bei den bekannten Anordrungen ging mit einer verbesserten Abstützung jedoch stets eine verschlechterte Dämpfung einher, so dass die Abstützung häufig von der Dämpfung entkoppelt wurde. Insbesondere für den Einbau von Gebläsen mit Welienlagen zwischen senkrecht bis waagerecht wurden zusätzliche Abstützvorrichtungen für den seitlich angeordneten Elektromotor bereitgestellt, um die Dämpfungseigenschafften der Dämpfungselemente aufrecht zu erhalten. Andernfalls würde das verhältnismäßig hohe Gewicht des Motors gegen die Dämpfungselemente wirken und deren eigentliche Dämpfungsfunktion einschränken.

Die erfindungsgemäße Lösung sieht vor, dass eine von dem Motor ausgehende Krafteinleitung auf die elastischen Dämpfungselemente von allen Seiten auf Zug und Druck ermöglicht ist. Vorzugsweise umfassen das Motor-Trägerelement und die Gehäusewand jeweils drei in Umfangsrichtung in jeweils gleichen Abständen von 120 Grad in jeweils einer Ebene angeordnete Ansätze und Aufnahmen, die jeweils über ein elastisches Dämpfungselement miteinander verbunden sind. Die vom Motor durch sein Eigengewicht, insbesondere bei Einbaulage mit waagerechter Welle, ausgehenden und auf die Dämpfungselemente wirkenden Kräfte und Schwingungen werden über die Ansätze des Motors-Trägerelements in die elastischen Dämpfungselemente eingeleitet, wobei eine Zugkraft bei einem elastischem Dämpfungselement eine Druckkraft bei den weiteren Dämpfungselementen bewirkt und umgekehrt. Dadurch, dass die jeweiligen axialen Mittelachsen der elastischen Dämpfungselemente zumindest abschnittsweise in Richtung des Motors weisen, können vergleichsweise deutlich höhere Kräfte aufgenommen und gleichzeitig eine verbesserte Abstützung bei gleichbleibender Dämpfung realisiert werden, ohne das zusätzliche Abstützeinrichtungen unter anderem für die Einbaulage mit waagrechter Welle des Gebläses vorgesehen sein müssten.

Erfindungsgemäß weisen die jeweiligen axialen Mittelachsen der elastischen Dämpfungselemente zumindest abschnittsweise in Richtung des Motorschwerpunkts. Auf diese Weise werden die vom Motor ausgehenden Kräfte zentral in die elastischen Dämpfungselemente eingeleitet, wodurch eine besonders gute Abstützung und Dämpfung gewährleistet werden. Auch ist die Kraftaufnahmefähigkeit der elastischen Dämpfungselemente ideal ausgenutzt. In einer bevorzugten Ausführung weisen dabei die axialen Mittelachsen der elastischen Dämpfungselemente zumindest in einem Verbindungsbereich zu den Ansätzen des Motors-Trägerelements in Richtung des Motorschwerpunkts, so dass die Krafteinleitung über die Ansätze in die zum Motorschwerpunkt weisenden elastischen Dämpfungselemente erfolgt.

In einer vorteilhaften Ausführung ist das Motor-Trägerelement selbst ein Teil des Motors und bildet dessen Lagerschild. Auf diese Weise kann zum einen die Bauhöhe der schwingungsdämpfenden Aufnahmevorrichtung gering gehalten, zum anderen die Anzahl der absolut benötigten Bauteile reduziert werden. Der Lagerschild wird vorzugsweise aus Kunststoff gefertigt, so dass die Ansätze außenseitig in Umfangsrichtung verteilt und zu den Aufnahmen der Gebläsegehäusewand weisend mit angespritzt sind. Eine derartige Lösung ist ferner auch besonders kostengünstig realisierbar.

Auch ist eine Ausführung bevorzugt, bei der die Gehäusewand im Bereich der Aufnahmen ununterbrochen, d h ohne Bohrungen, Durchtrittsöffnungen, Befestigungslöcher oder dergleichen ausgebildet ist, sondern die Aufnahmen an der Gehäusewand angeformt sind. Unterbrechungen der Gehäusewand, wie sie bzw. in der DE 201 09332 U1 zur Befestigung eines Bolzens vorgesehen werden, sind nachteilig, da durch derartige Unterbrechungen das Risiko von Leckagen besteht. Das direkte Anformen der Aufnahmen an der Gehäusewand ohne derartige Durchtrittsöffnungen bereitstellen zu müssen, vermeidet dieses Risiko. Die Gehäusewand und die Aufnahmen können hierzu beispielsweise ganzheitlich als Spritzgussteil gefertigt sein. Mit einer solchen Ausführung ist gewährleistet, dass die elastischen Dämpfungsefemente das Motor-Trägerelement bzw. den Lagerschild unmittelbar mit der Gehäusewand elastisch verbinden. Die Anzahl der benötigten Bauteile ist somit weiter minimiert.

Zur Befestigung der elastischen Dämpfungselemente an den Aufnahmen der Gehäusewand und den Ansätzen des Lagerschilds ist erfindungsgemäß vorgesehen, dass die Ansätze und die Aufnahmen eine Zentralöffnung mit einer seitlichen Einschuböffnung aufweisen, in die die elastischen Dämpfungselemente einschiebbar sind. Eine derartige Ausbildung ist sowohl an den Ansätzen als auch den Aufnahmen vorgesehen, da hierdurch eine besonders leichte, schnelle und automatisierbare Montage der Dämpfungselemente ermöglicht ist. Gegenüber der im Stand der Technik häufig verwendeten Einknöpfmethode, bei der Teile des jeweiligen elastischen Elements durch eine Durchtrittsöffnung teilweise hindurch geschoben werden, bis ein entsprechender Eingriff an einer vorbestimmter Stelle erzielt wird, werden die erfindungsgemäßen Dämpfungselemente einfach und schnell in die seitliche Einschuböffnung eingeschoben und sind anschließend an der Zentralöffnung anliegend befestigt.

In einer vorteilhaften Ausführung weisen die Ansätze und/oder die Aufnahmen zueinander weisende Hakenabschnitte auf, welche die Seitenränder der Einschuböffnung bilden. Die Hakenabschnitte sind vorteilhafterweise außenseitig in Richtung des Mittelpunkts der Zentralöffnung einwärts gekrümmt, um die elastischen Dämpfungselemente leichtgängig in Richtung der Zentralöffnung einschieben zu können. Auf der zur Zentralöffnung zugewandten Seite bilden die Hakenabschnitte einen Hinterschnitt, der ein ungewolltes Lösen des Dämpfungselements aus der Halteposition in der Zentralöffnung verhindert.

Zur Montage werden die elastischen Dämpfungselemente lediglich seitlich zusammengerückt und durch die seitliche Einschuböffnung in die Ansätze bzw. Aufnahmen bis in die jeweilige Zentralöffnung eingeschoben. An dieser Stelle können die elastischen Dämpfungselemente ihre Ursprungsform wieder einnehmen und werden von den Hakenabschnitten in ihrer jeweiligen Position gehalten.

In einer vorteilhaften Ausführungsform weisen die elastischen Dämpfungselemente an mindestens einem ihrem axialen Endbereiche einen außenseitigen Kanal auf, der in die Einschuböffnung der Ansätze und der Aufnahmen derart einschiebbar ist, dass die elastischen Dämpfungselemente in axialer Richtung gehalten sind und die Zug- und Druckkräfte aufnehmen können. Vorzugsweise sind sowohl im Bereich der Ansätze als auch der Aufnahmen jeweils Kanäle vorgesehen. Mit Hilfe des jeweiligen Kanals können zum einen die Dämpfungselemente an einer vordefinierten Position in die Ansätze und Aufnahmen eingeschoben werden, zum anderen können die vom Motor erzeugten Kräfte und Schwingungen über die axialen Randflächen des Kanals, die an den axialen Randflächen der Ansätze und Aufnahmen anliegen, übertragen werden.

In einer bevorzugten Ausführung ist ein solcher Kanal zumindest teilweise durch sich in radiale Richtung über eine Außenfläche der elastischen Dämpfungselemente hinaus erstreckende, umlaufende Stege gebildet. Durch die sich radial erstreckenden Stege wird die axiale Kontaktfläche zwischen Ansätzen und elastischem Element bzw. Aufnahmen und elastischem Element vergrößert, so dass die Dämpfungselemente beidseitig befestigt sind und gegenüber den Ausführungen des Stands der Technik höhere Zug- und Druckkräfte übertragen können. Günstigerweise sind derartige Kanäle durch eine umlaufende Nut an der Außenfläche der Dämpfungselemente sowie jeweils angrenzend sich radial erstreckende Stege gebildet.

Um den Platz zwischen Motor und Gehäusewand optimal zu nutzen, ist erfindungsgemäß vorgesehen, dass die elastischen Dämpfungselemente abgewinkelt ausgebildet sind und in einer Ausführungsform einen Winkel zwischen 40 und 60 Grad, vorzugsweise 45 bis 50 Grad, noch bevorzugter 45 Grad aufspannen. Bei einer solchen Ausführung können die Aufnahmen nahe am Lagerschild angeordnet und ohne Hinterschnitt und somit werkzeugtechnisch einfach gefertigt werden. Dies ist insbesondere bei der Herstellung der Gebläsegehäusewand mittels Spritzguss von Vorteil. Günstig ist, wenn sich die Aufnahmen senkrecht zur Gebläsegehäusewand erstrecken, so dass die elastischen Dämpfungselemente senkrecht von oben in die seitliche Einschuböffnung einführbar sind.

In einer Weiterbildung der Ausführung mit abgewinkelten Dämpfungselementen sind in dem jeweiligen Kanal Mittel zur Verdrehsicherung vorgesehen. Hierdurch wird sichergestellt, dass die Dämpfungselemente nach der Montage in der gewünschten Position verbleiben und sich bei Zug-, Druckbelastungen oder Vibrationen nicht verdrehen. Als Mittel zur Verdrehsicherung sind in einer vorteilhaften Ausführung innerhalb des Kanals angeformte Vorsprünge vorgesehen, die sich im eingebauten Zustand an den Hinterschnitten der Hakenabschnitte formschlüssig abstützen.

Ebenfalls vorteilhaft ist, wenn die Dämpfungselemente rohrförmig ausgebildet sind und mindestens einen Axialsteg aufweisen, der sich zentral durch das Dämpfungselement erstreckt und seine Stabilität erhöht. Günstige Verstärkungseigenschaften werden insbesondere dann erzielt, wenn der Axialsteg eine Wandstärke aufweist, die kleiner oder gleich der Wandstärke der Außenwand des Dämpfungselements ist.

Die elastischen Dämpfungselemente sind vorzugsweise aus Silikon im Silikonspritzgussverfahren hergestellt und weisen eine Härte von 30 bis 80 Shore-A, vorzugsweise 50 bis 70 Shore-A auf. Für verhältnismäßig schwere Elektromotoren können härtere, für leichtere Elektromotoren weniger harte Dämpfungselemente eingesetzt werden.

In einer Weiterbildung der Erfindung ist eine Verdrehsicherung vorgesehen, die Drehbewegungen des Motor-Trägerelements bzw. des Lagerschilds gegenüber der Gehäusewand in Umfangsrichtung begrenzt. Hierzu ist in einer bevorzugten Ausführungsform an der Gehäusewand ein Vorsprung ausgebildet, der von einem Abschnitt des Motor-Trägerelements bzw. des Lagerschilds übergriffen ist.

Die Erfindung ermöglicht es, die Aufnahmevorrichtung zur Abstützung und Dämpfung auf wenige Bauteile zu reduzieren, wobei die vom Motor ausgehenden Kräfte auf die unmittelbar auf der Gehäusewand angeordneten Dämpfungselemente übertragen werden. In einer Ausführung des Motor-Trägerelements als Lagerschild, der dann Bestandteil des Motors ist, verbleiben als verwendete Bauteile somit lediglich die Gehäusewand, die Dämpfungselemente und der Motor.

Bevorzugte Weiterbildungen der Erfindung sind in den Unteransprüchen definiert und ergeben sich aus der nachfolgenden Beschreibung. Ohne hierauf beschränkt zu sein, werden Ausführungsbeispiele anhand der beigefügten Zeichnungen näher erläutert. Die beispielhaft schematischen Zeichnungen zeigen:
- Fig. 1: Einen Ausschnitt einer perspektiven Darstellung der Aufnahmevorrichtung;
- Fig. 2: Einen Ausschnitt einer perspektivisch Darstellung einer weiteren Ausführung der erfindungsgemäßen Aufnahmevorrichtung;
- Fig. 3: Einen Ausschnitt einer perspektivisch Darstellung einer weiteren Ausführung der erfindungsgemäßen Aufnahmevorrichtung;
- Fig. 4: Eine teilweise Schnittansicht der Ausführung gemäß Fig. 2;
- Fig. 5: Eine perspektivische Ansicht eines Dämpferelements der Fig. 2-4.

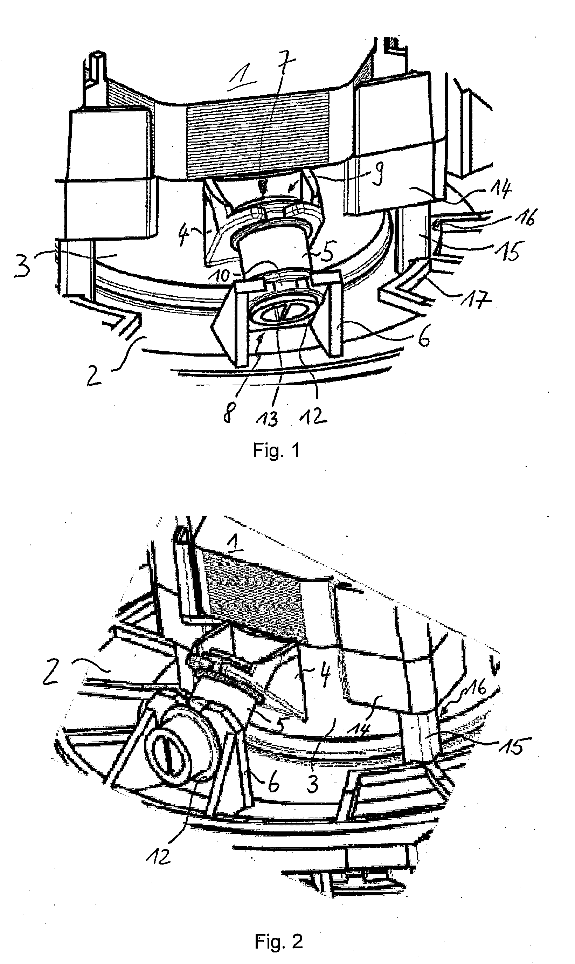

In Figur 1 ist perspektivisch ein Ausschnitt einer schwingungsdämpfenden Aufnahmevorrichtung zur Aufnahme eines Motors 1 an einer Gebläsegehäusewand 2 dargestellt. Ein als Lagerschild des Motors 1 ausgebildetes MotorTrägerelement 3 weist über seine Umfangsrichtung mit jeweils gleichen Abständen von 120 Grad angeordnete Ansätze 4 auf, die zur Befestigung je eines elastischen Dämpfungselements 5 geeignet sind. An der Gebläsegehäusewand 2 sind drei Aufnahmen 6 derart angeformt, dass ihre senkrechte Mittelebene deckungsgleich mit derjenigen der Ansätze 4 ist. Das elastische Dämpfungselement 5 ist sowohl an den Ansätzen 4 als auch den Aufnahmen 6 lösbar befestigt und dabei derart angeordnet, dass ihre jeweiligen axialen Mittelachsen in Richtung des Motors 1, in der gezeigten Ausführung in Richtung des Schwerpunkts des Motors 1, weisen. Sowohl der Lagerschild 3 als auch die Gebläsegehäusewand 2 sind aus Kunststoff, wobei die Ansätze 4 und die Aufnahmen 6 jeweils im Spritzgussverfahren angeformt sind. Alternativ kann las Material auch Aluminium verwendet werden, das im Alu-Druckguss verarbeitet wird. Über die elastischen Dämpfungselemente 5 werden der Lagerschild 3 und die Gebläsegehäusewand 2 unmittelbar miteinander verbunden. Dabei ist die Gebläsehäusewand 2 als ununterbrochener Scheibenkörper ausgebildet, d.h. neben der Durchtrittsöffnung für die Motorwelle im Zentralbereich weist die Gebläsegehäusewand 2 keine weitere Öffnung auf. Sowohl die Ansätze 4 als auch die Aufnahmen 6 umfassen je eine Zentralöffnung 7, 8, in denen die elastischen Dämpfungselemente 5 im eingebauten Zustand lösbar befestigt angeordnet sind. Die Zentralöffnungen 7, 8 weisen je eine seitliche Einschuböffnung 9, 10 auf, in die die elastische Dämpfungselemente 5 zur Montage eingeschoben werden. Die Einschuböffnungen 9, 10 der Ansätze 4 und der Aufnahmen 6 sind durch zueinander weisende Hakenabschnitte gebildet, wobei die Hakenabschnitte je einen Hinterschnitt aufweisen, der das elastische Dämpfungselement 5 im eingebauten Zustand vor ungewolltem Lösen sichert. Die Öffnungsweite der seitlichen Einschuböffnung 9, 10 entspricht der doppelten Wandstärke der elastischen Dämpfungselemente 5. Die seitliche Einschuböffnungen 9 der gezeigten Ansatzes 4 weist außenseitige Abrundungen auf, um das elastische Dämpfungselement 5 leichtgängig zur Zentralöffnung 7 einführen zu können. Ohne, dass es zu erkennen wäre ist eine derartige Ausbildung an jedem der Ansätze 4 und Aufnahmen 6 vorgesehen.

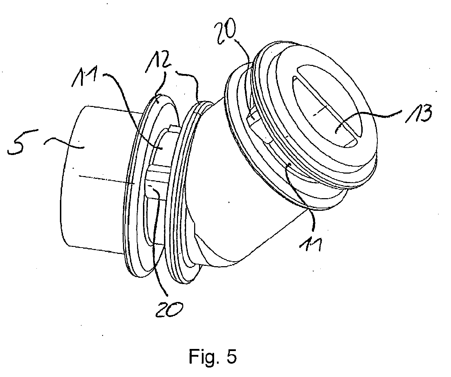

Die elastische Dämpfungselement 5 weisen an ihren axialen Endbereichen außenseitig Kanäle 11 auf, die in die jeweiligen Einschuböffnungen 9, 10 der Ansätze 4 und Aufnahmen 6 derart eingeschoben sind, dass die Hakenabschnitte den jeweiligen Kanal 11 des elastischen Dämpfungselements 5 umgreifen, so dass die axialen Randebenen der Hakenabschnitte mit den axialen Wänden der Kanäle 11 in Eingriff stehen und die elastischen Dämpfungselemente 5 in beide axialen Richtungen sowohl an den Ansätzen 4 als auch den Aufnahmen 6 gehalten sind. In der Ausführungsform nach Fig. 1 sind die Kanäle 11 durch eine umlaufende Nut im Außenmaterial des Dämpfungselements 5 sowie durch sich über dessen Außenfläche hinaus erstreckende, umlaufende Stege 12 gebildet (siehe auch Fig. 5). Die Stege 12 sind an beiden axialen Seiten der Kanäle 11 angeordnet und vergrößern die axiale Haltefläche zwischen den Ansätzen 4 sowie der Aufnahme 6 mit dem elastischen Dämpfungselement 5.

Zur Erhöhung der Stabilität ist das Dämpfungselement 5 rohrförmig ausgebildet. Ferner ist ein sich durch das Dämpfungselement 5 hindurch erstreckender Axialsteg 13 vorgesehen, dessen Wandstärke kleiner oder gleich der Wandstärke des Dämpfungselements 5 ist. In der gezeigten Ausführung entspricht die Dicke des Axialstegs der halben Wandstärke des Dämpfungselements 5.

Die erfindungsgemäße schwingungsdämpfende Aufnahmevorrichtung dient zur Aufnahme von Zug- und Druckkräften, die vom Motor 1 in Richtung der Gehäusewand 2 erzeugt werden. Zur Vermeidung zusätzlicher rotatorischer Drehbewegungen des Motors 1 gegenüber der Gebläsegehäusewand 2 ist eine Verdrehsicherung 16 vorgesehen, bei der ein am Lagerschild 3 angeformter Hohlkörper 14 einen an der Gebläsegehäusewand 2 angeformten Stift 15 übergreift. Zusätzlich sind in der gezeigten Ausführung optionale an der Gebläsegehäusewand 2 außenseitig angeformte Versteifungsrippen 17 vorgesehen. Figur 1 zeigt nicht abgewinkelte Dämpfungselemente 5 und ist somit nicht Teil der Erfindung, jedoch gelten die übrigen beschriebenen Merkmale für die erfindungsgemäßen Lösungen.

Im Fig. 2 ist ein Ausschnitt einer alternativen Ausführungsform der schwingungsdämpfenden Aufnahmevorrichtung dargestellt, wobei Merkmale, die nicht anders beschrieben, identisch zur Ausführung gemäß Fig. 1 sind. Die elastischen Dämpfungselemente 5 sind abgewinkelt ausgebildet und spannen einen Winkel von 45 Grad auf. Bei Motoren mit höher liegendem Schwerpunkt, d.h. einem Schwerpunkt der weiter von der Gebläsegehäusewand 2 entfernt liegt, kann der Winkel kleiner gebildet, bei Motoren mit tiefer liegendem Schwerpunkt größer ausbildet sein. Die Hakenabschnitte der Aufnahmen 6 erstrecken sich senkrecht zur Gebläusegehäusewand 2 und können somit besonders einfach im Spritzgussverfahren gefertigt werden. Die elastischen Dämpfungselemente 5 weisen in ihren Kanälen 11 Mittel zur Verdrehversicherung auf, die dadurch realisiert werden, dass an den radialen Außenflächen der Kanäle 11 Vorsprünge 20 vorgesehen sind, die im eingebauten Zustand an den Hinterschnitten der Hakenabschnitte der Ansätze 4 bzw. der Aufnahmen 6 anliegen.

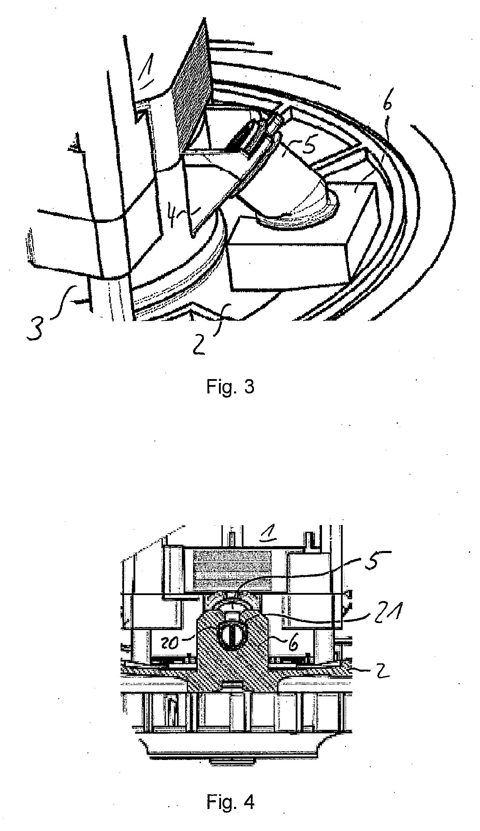

Fig. 3 zeigt eine weitere Ausführung mit sämtlichen Merkmalen aus Fig. 1, wobei die Aufnahme 6 als an der Gebläsegehäusewand 2 angeordneter Kasten ausgebildet ist, in den das Dämpferelement 5 seitlich einschiebbar ist. Das Dämpfungselement 5 ist wie in Fig. 2 abgewinkelt ausgebildet, jedoch gegenüber der Ausführung aus Fig. 2 um 180 Grad gedreht angeordnet.

In Fig. 4 ist die Ausführung von Fig. 2 in einer seitlichen Schnittansicht dargestellt, wobei die Schnittkante durch die Aufnahme 6 verläuft. In dem Kanal 11 des elastischen Dämpfungselements 5 sind als Verdrehsicherung Vorsprünge 20 angeformt, die mit den Hinterschnitten 21 der Hakenabschnitte der Aufnahmen 6 in Eingriff stehen. Sobald das elastische Dämpfungselement 5 in die Zentralöffnung 8 eingeschoben ist, kann mittels der Vorsprünge 20 das elastische Dämpfungselement 5 in die vorbestimmte Position gedreht werden, bis die Vorsprünge 20 an den Vorsprüngen 21 anliegen. Ein Weiterdrehen ist sowohl bei der Montage als auch im Betrieb verhindert. Eine entsprechende Ausbildung der Dämpfungselemente 5 ist auch in den Kanälen bei den Ansätzen 4 vorgesehen.

In Fig. 5 ist ein Dämpferelement 5 der Fig. 2 bis 4 in perspektivischer Ansicht mit einem aufgespannten Winkel von 45 Grad dargestellt. Die Ausführung in Fig. 1 unterscheidet sich lediglich durch die gerade Ausbildung. Die im jeweils axialen Endbereiche angeordneten beidseitigen Kanäle 11 sind durch eine umlaufende Nut gebildet, an deren axialen Außenkanten sich zusätzlich die Stege 12 radial erstrecken. Innerhalb der Kanäle 11 sind die Vorsprünge 20 angeformt, die eine Verdrehung des in der jeweiligen Zentralöffnung der Aufnahmen oder Ansätze angeordneten Dämpferelements 5 verhindern. Bei einer geraden Ausbildung gemäß Fig. 1 kann auf die Vorsprünge verzichtet werden. Der Axialsteg 13 ist zentral angeordnet, erstreckt sich mittig durch das gesamte elastische Dämpferelement 5 und verläuft in eingebautem Zustand wie in Fig. 2 gezeigt senkrecht.

Die Erfindung beschränkt sich nicht auf die vorstehenden angegebenen bevorzugten Ausführungsbeispielen. Vielmehr ist eine Anzahl von Varianten denkbar, welche von der dargestellten Lösung auch bei grundsätzlich anders gearteten Ausführungen Gebraucht macht. Beispielsweise kann neben dem senkrecht durch das elastische Dämpfungselement verlaufenden Axialsteg zusätzlich oder alternativ ein waagerecht verlaufender Axialsteg oder drei Axialstege in Sternform im Winkel von 60 GRAD zueinander vorgesehen sein. Ferner können neben den singulär dargestellten Vorsprüngen zum Eingriff mit den Hinterschnitten der Hakenabschnitte weitere Vorsprünge vorgesehen sein, die in entsprechende Ausnehmungen der Ansätze bzw. Aufnahmen als eine Art Verrastung eingreifen.

## Patentansprüche

1. Schwingungsdämpfende Aufnahmevorrichtung, die einen Motor (1) an einer Gebläsegehäusewand (2) aufnimmt, mit einem MotorTrägerelement (3), an dem mehrere Ansätze (4) ausgebildet sind, mehreren unmittelbar an der Gebläsegehäusewand (2) angeordneten Aufnahmen (6), und mehreren elastischen Dämpfungselementen (5), die zwischen den Ansätzen (4) und den Aufnahmen (6) angeordnet sind, wobei die Ansätze (4) und die Aufnahmen (6) je eine Zentralöffnung (7, 8) umfassen, in denen die elastischen Dämpfungselemente (5) im eingebauten Zustand lösbar befestigt angeordnet sind, und wobei die Dämpfungselemente (5) abgewinkelt ausgebildet sind und ihre axialen Mittelachsen zumindest abschnittsweise in Richtung eines Motorschwerpunkts weisen.

2. Schwingungsdämpfende Aufnahmevorrichtung nach Anspruch 1, **dadurch gekennzeichnet, dass** die jeweiligen axialen Mittelachsen der elastischen Dämpfungselemente (5) jeweils zumindest in einem Verbindungsbereich zu den Ansätzen (4) des Motor-Trägerelements (3) in Richtung des Motorschwerpunkts weisen.

3. Schwingungsdämpfende Aufnahmevorrichtung nach zumindest einem der vorigen Ansprüche, **dadurch gekennzeichnet, dass** das Motor-Trägerelement (3) den Lagerschild des Motors (1) bildet.

4. Schwingungsdämpfende Aufnahmevorrichtung nach zumindest einem der vorigen Ansprüche, **dadurch gekennzeichnet, dass** die Gebläsegehäusewand (2) ununterbrochen ausgebildet ist und die Aufnahmen (6) an der Gebläsegehäusewand (2) angeformt sind.

5. Schwingungsdämpfende Aufnahmevorrichtung nach zumindest einem der vorigen Ansprüche, **dadurch gekennzeichnet, dass** die elastischen Dämpfungselemente (5) das Motor-Trägerelement (3) unmittelbar mit den Aufnahmen (6) der Gebläsegehäusewand (2) verbinden.

6. Schwingungsdämpfende Aufnahmevorrichtung nach zumindest einem der vorigen Ansprüche, **dadurch gekennzeichnet, dass** die Ansätze (4) und/oder die Aufnahmen (6) die Zentralöffnung (7, 8) mit einer seitlichen Einschuböffnung (9, 10) aufweisen, in die die elastischen Dämpfungselemente (2) einschiebbar sind.

7. Schwingungsdämpfende Aufnahmevorrichtung nach dem vorigen Anspruch, **dadurch gekennzeichnet, dass** die Ansätze (4) und/oder die Aufnahmen (6) zueinander weisende Hakenabschnitte aufweisen, welche die Einschuböffnung (9, 10) bilden.

8. Schwingungsdämpfende Aufnahmevorrichtung nach zumindest einem der vorigen Ansprüche 6 bis 7, **dadurch gekennzeichnet, dass** die elastischen Dämpfungselemente (5) an mindestens einem ihrer axialen Endbereiche einen außenseitigen Kanal (11) aufweisen, der in die Einschuböffnung (9, 10) der Ansätze (4) und/oder der Aufnahmen (6) derart einschiebbar ist, dass die elastischen Dämpfungselemente (5) in axialer Richtung gehalten sind.

9. Schwingungsdämpfende Aufnahmevorrichtung nach dem vorigen Anspruch, **dadurch gekennzeichnet, dass** der Kanal (11) zumindest teilweise durch sich in radiale Richtung über eine Außenfläche der elastischen Dämpfungselemente (5) hinaus erstreckende, umlaufertde Stege (12) gebildet ist.

10. Schwingungsdämpfende Aufnahmevorrichtung nach zumindest einem der vorigen Ansprüche 8 bis 9, **dadurch gekennzeichnet, dass** in dem Kanal (11) Mittel zur Verdrehsicherung vorgesehen sind.

11. Schwingungsdämpfende Aufnahmevorrichtung nach zumindest einem der vorigen Ansprüche, **dadurch gekennzeichnet, dass** die elastischen Dämpfungselemente (5) rohrförmig ausgebildet sind und mindestens einen Axialsteg (13) aufweisen.

12. Schwingungsdämpfende Aufnahmevorrichtung nach zumindest einem der vorigen Ansprüche, **dadurch gekennzeichnet, dass** die elastischen Dämpfungsefemente (5) einen Winkel zwischen 40 und 60 GRAD aufspannen.

13. Schwingungsdämpfende Aufnahmevorrichtung nach zumindest einem der vorigen Ansprüche, **dadurch gekennzeichnet, dass** die elastischen Dämpfungselemente (5) eine Härte von 30-80 Shore-A aufweisen.

14. Schwingungsdämpfende Aufnahmevorrichtung nach zumindest einem der vorigen Ansprüche, **gekennzeichnet durch** eine Verdrehsicherung (16), die Drehbewegungen des MotorTrägerelements (3) gegenüber der Gebläsegehäusewand (2) begrenzt.

## Claims

1. Vibration damping receptacle device receiving a motor (1) on a fan housing wall (2), having a motor mounting element (3) on which a plurality of attackments (4) are constructed, a plurality of receptacles (6) arranged directly on the fan housing wall (2) and a plurality of resilient damping elements (5) which are arranged between the attachments (4) and the receptacles (6), wherein the attachments (4) and the receptacles (6) each comprise a central opening (7, 8) in which the resilient damping elements (5) are arranged in a releasably fastened manner in the installed state, and wherein the resilient damping elements (5) are angled and their respective axial centrelines point at least in sections in the direction of a motor centre of gravity.

2. Vibration damping receptacle device according to claim 1, **characterised in that** the respective axial centrelines of the resilient damping elements (5) each point at least in a connecting region to the attachments (4) of the motor mounting element (3) in the direction of the motor centre of gravity.

3. Vibration damping receptacle device according to at least one of the preceding claims, **characterised in that** the motor mounting element (3) forms the bearing end plate of the motor (1).

4. Vibration damping receptacle device according to at least one of the preceding claims, **characterised in that** the fan housing wall (2) is continuous and the receptacles (6) are formed integrally on the fan housing wall (2).

5. Vibration damping receptacle device according to at least one of the preceding claims, **characterised in that** the resilient damping elements (5) of the motor mounting element (3) join directly to the receptacles (6) of the fan housing wall (2).

6. Vibration damping receptacle device according to at least one of the preceding claims, **characterised in that** the attachments (4) and/or the receptacles (6) have the central opening (7, 8) with a lateral insertion opening (9, 10) into which the resilient damping elements (2) are insertable.

7. Vibration damping receptacle device according to the preceding claim, **characterised in that** the attachments (4) and/or the receptacles (6) have hook sections pointing towards each other which form the insertion opening (9, 10).

8. Vibration damping receptacle device according to at least one of the preceding claims 6 to 7, **characterised in that** the resilient damping elements (5) have an external channel (11) on at least one of their axial end regions, said channel being insertable in insertion opening (9, 10) of the attachments (4) and/or of the receptacles (6) in such a manner that the resilient damping elements (5) are held in their axial direction.

9. Vibration damping receptacle device according to the preceding claim, **characterised in that** the channel (11) is formed at least in part by peripheral webs (12) extending radially beyond an outer surface of the resilient damping elements (5).

10. Vibration damping receptacle device according to at least one of the preceding claims 8 to 9, **characterised in that** anti-torsion means are provided in the channel (11).

11. Vibration damping receptacle device according to at least one of the preceding claims, **characterised in that** the resilient damping elements (5) are tubular and have at least one axial web (13).

12. Vibration damping receptacle device according to at least one of the preceding claims, **characterised in that** the resilient damping elements (5) span an angle between 40 and 60 DEGREES.

13. Vibration damping receptacle device according to at least one of the preceding claims, **characterised in that** the resilient damping elements (5) have a hardness of 30-80 Shore A.

14. Vibration damping receptacle device according to at least one of the preceding claims, **characterised by** an anti-torsion device (16) which limits the rotary movements of the motor mounting element (3) in relation to the fan housing wall (2).

## Revendications

1. Dispositif de logement amortissant les vibrations recevant un moteur (1) sur une paroi de boîtier de ventilateur (2), ayant un élément de montage de moteur (3) sur lequel une pluralité de fixations (4) sont réalisées, une pluralité de logements (6) agencés directement sur la paroi de boîtier de ventilateur (2) et une pluralité d'éléments d'amortissement élastiques (5) qui sont agencés entre les fixations (4) et les logements (6), dans lequel les fixations (4) et les logements (6) comprennent chacun une ouverture centrale (7, 8) dans laquelle les éléments d'amortissement élastiques (5) sont disposés d'une manière attachés de façon amovible dans l'état installé, et dans lequel les éléments d'amortissement élastiques (5) sont disposés en angle et leurs lignes médianes axiales respectives pointent au moins dans des sections dans la direction d'un centre de gravité du moteur.

2. Dispositif de logement amortissant les vibrations selon la revendication 1, **caractérisé en ce que** les lignes médianes axiales respectives des éléments d'amortissement élastiques (5) pointent chacune au moins dans une région de connexion avec les fixations (4) de l'élément de montage de moteur (3) dans la direction du centre de gravité du moteur.

3. Dispositif de logement amortissant les vibrations selon au moins une des revendications précédentes, **caractérisé en ce que** l'élément de montage de moteur (3) forme la plaque d'extrémité de support du moteur (1).

4. Dispositif de logement amortissant les vibrations selon au moins une des revendications précédentes, **caractérisé en ce que** la paroi de boîtier de ventilateur (2) est continue et les logements (6) sont formés intégralement sur la paroi de boîtier de ventilateur (2).

5. Dispositif de logement amortissant les vibrations selon au moins une des revendications précédentes, **caractérisé en ce que** les éléments d'amortissement élastiques (5) de l'élément de montage de moteur (3) sont unis directement aux logements (6) de la paroi de boîtier de ventilateur (2).

6. Dispositif de logement amortissant les vibrations selon au moins une des revendications précédentes, **caractérisé en ce que** les fixations (4) et/ou les logements (6) ont une ouverture centrale (7, 8) avec une ouverture d'insertion latérale (9, 10) dans laquelle les éléments d'amortissement élastiques (2) peuvent être insérés.

7. Dispositif de logement amortissant les vibrations selon la revendication précédente, **caractérisé en ce que** les fixations (4) et/ou les logements (6) ont des sections formant crochet orientées l'une vers l'autre, qui forment l'ouverture d'insertion (9, 10).

8. Dispositif de logement amortissant les vibrations selon au moins une des revendications précédentes 6 à 7, **caractérisé en ce que** les éléments d'amortissement élastiques (5) ont un canal externe (11) sur au moins une de leurs régions d'extrémité axiale, ledit canal pouvant être inséré dans une ouverture d'insertion (9, 10) des fixations (4) et/ou des logements (6) de telle manière que les éléments d'amortissement élastiques (5) soient maintenus dans leur direction axiale.

9. Dispositif de logement amortissant les vibrations selon la revendication précédente, **caractérisé en ce que** le canal (11) est formé au moins en partie par des ailes périphériques (12) s'étendant radicalement au-delà d'une surface extérieure des éléments d'amortissement élastiques (5).

10. Dispositif de logement amortissant les vibrations selon au moins une des revendications précédentes 8 à 9, **caractérisé en ce que** des moyens anti-torsion sont disposés dans le canal (11).

11. Dispositif de logement amortissant les vibrations selon au moins une des revendications précédentes, **caractérisé en ce que** les éléments d'amortissement élastiques (5) sont tubulaires et ont au moins une aile axiale (13).

12. Dispositif de logement amortissant les vibrations selon au moins une des revendications précédentes **caractérisé en ce que** les éléments d'amortissement élastiques (5) couvrent un angle entre 40 et 60 degrés.

13. Dispositif de logement amortissant les vibrations selon au moins une des revendications précédentes, **caractérisé en ce que** les éléments d'amortissement élastiques (5) ont une dureté de 30-80 Shore A.

14. Dispositif de logement amortissant les vibrations selon au moins une des revendications précédentes, **caractérisé par** un dispositif anti-torsion (16) qui limite les mouvements de rotation de l'élément de montage de moteur (3) par rapport à la paroi de boîtier de ventilateur (2).
